# EUROPÄISCHE PATENTSCHRIFT

(11) **EP 1 616 785 B1**
(45) Veröffentlichungstag und Bekanntmachung des Hinweises auf die Patenterteilung: **15.11.2006**
(21) Anmeldenummer: 04450196.3
(22) Anmeldetag: 28.10.2004
(51) Int. Cl.: B64C 39/02, A63H 27/133

(54) **Unbemannter Hubschrauber mit selbsttragendem Gehäuse**
Unmanned helicopter with a self-supporting housing
Hélicoptère sans occupant avec un boîtier autoportant

(30) Priorität: 15.07.2004 AT 12022004
(43) Veröffentlichungstag der Anmeldung: 18.01.2006
(73) Patentinhaber: Schiebel Industries AG, 1050 Wien (AT)
(72) Erfinder: Schiebel, Hans-Georg, 1050 Wien (AT)
(74) Vertreter: Rippel, Andreas

(56) Entgegenhaltungen:
- EP-A- 1 044 709
- PATENT ABSTRACTS OF JAPAN Bd. 1999, Nr. 01, 29. Januar 1999 (1999-01-29) & JP 10 263215 A (MUGEN:KK), 6. Oktober 1998 (1998-10-06)
- PATENT ABSTRACTS OF JAPAN Bd. 2002, Nr. 11, 6. November 2002 (2002-11-06) & JP 2002 193193 A (YAMAHA MOTOR CO LTD), 10. Juli 2002 (2002-07-10)
- PATENT ABSTRACTS OF JAPAN Bd. 0162, Nr. 06 (M-1248), 15. Mai 1992 (1992-05-15) & JP 4 031196 A (YAMAHA MOTOR CO LTD), 3. Februar 1992 (1992-02-03)

## Beschreibung

Die Erfindung bezieht sich auf einen unbemannten Hubschrauber mit einem Verbrennungsmotor und einem zugehörigen Treibstofftank.

Unbemannte Flugzeuge werden in vielen Fällen dazu eingesetzt, um ein Gebiet zu erkunden, wobei bei der Erkundung Gefahren auftreten können. Die Steuerung dieser unbemannten Flugzeuge erfolgt dabei über Funk. Besonders zweckmäßig zur Aufnahme von Bildern haben sich Hubschrauber erwiesen, weil sie in der Luft praktisch stehen können und einen im wesentlichen senkrechten Start und eine senkrechte Landung ermöglichen.

Bekannte unbemannte Hubschrauber besitzen einen den Verbrennungsmotor aufnehmenden Hauptkörper, der aus einem beplankten räumlichen Fachwerk besteht. Ein solcher Aufbau ist verhältnismäßig aufwendig in der Herstellung und ist auch schwer, wodurch die mögliche Nutzlast verkleinert wird.

In der EP-A-1 044 709 ist ein Modelhubschrauber beschrieben, dessen Rumpf aus zwei Halbformen zusammengesetzt ist, wobei Motor und Getriebe in Aussparungen eingesetzt sind. Eine stabile Konstruktion insbesondere auch für größere Hubschrauber dürfte mit einer solchen Anordnung nicht erreicht werden.

In der JP-A-10263215 ist ein unbemannter Hubschrauber beschrieben, dessen einer Teil aus einem schachtelartig geformten Rahmen, der den Motor aufnimmt, besteht. Ein derartiger schachtelartiger Rahmen ist verhältnismäßig aufwendig herzustellen.

Die JP-A-2002193193 bezieht sich auf die Anordnung von zwei Kühlern bei einem unbemannten Hubschrauber, macht jedoch keine näheren Angaben über den Aufbau des den Motor aufnehmenden Gehäuses.

Die Erfindung hat es sich zum Ziel gesetzt, einen unbemannten Hubschrauber zu schaffen, der einfacher herzustellen ist und einen kompakten Aufbau aufweist. Erreicht wird dies dadurch, daß die Einheit aus Verbrennungsmotor und Getriebe in einem selbsttragenden, teilweise rundum geschlossenem Gehäuse, vorzugsweise aus kohlefaserverstärktem Kunststoff (CFK), angeordnet ist, an das nach vorne ein Nasenkörper anschließt.

Neben der kompakten Bauweise eines erfindungsgemäßen unbemannten Hubschraubers bietet die Erfindung noch die Möglichkeit, daß das die Einheit aus Verbrennungsmotor und Getriebe aufnehmende Gehäuse als Treibstofftank wenigstens teilweise hohl ausgebildet ist. Bei einem solchen Aufbau braucht kein eigener Treibstofftank hergestellt und unter Berücksichtigung der Gleichgewichtsverhältnisse im Hubschrauber befestigt werden.

Bei einer zweckmäßigen Ausführungsform der Erfindung ist in einer durch einen Deckel verschließbaren, nach außen offenen Ausnehmung des die Einheit aus Verbrennungsmotor und Getriebe aufnehmenden Gehäuses der Auspuff des Verbrennungsmotors angeordnet.

Um die Kühlung des Verbrennungsmotors zu optimieren, ist nach einem weiteren Merkmal der Erfindung auf der Oberseite des Nasenkörpers ein von einer Kühlflüssigkeit durchflossener Kühler für den Verbrennungsmotor angeordnet. Der Kühler ist demnach direkt der von den Rotoren des Hubschraubers beschleunigten Luft ausgesetzt, wodurch die Kühlwirkung optimiert ist.

Unterhalb des Kühlers für den Verbrennungsmotor ist vorteilhaft ein Ölkühler angeordnet. Die von den Rotoren kommende Kühlluft wird dadurch noch einmal ausgenützt.

Um für eine Wärmebildkamera unauffällig zu bleiben, wird der Auspuff gekühlt. Dies erfolgt derart, daß der Auspuff des Verbrennungsmotors von einem Doppelmantel umgeben ist, dessen äußerer Ringraum von der vom Kühler kommenden Kühlluft, und dessen anschließender innerer Ringraum von der vom Rotorlager des Verbrennungsmotors kommenden Kühlluft durchströmt wird.

Nachstehend ist die Erfindung anhand eines in den Zeichnungen dargestellten Ausführungsbeispieles näher beschrieben, ohne auf dieses Beispiel beschränkt zu sein. Dabei zeigen:

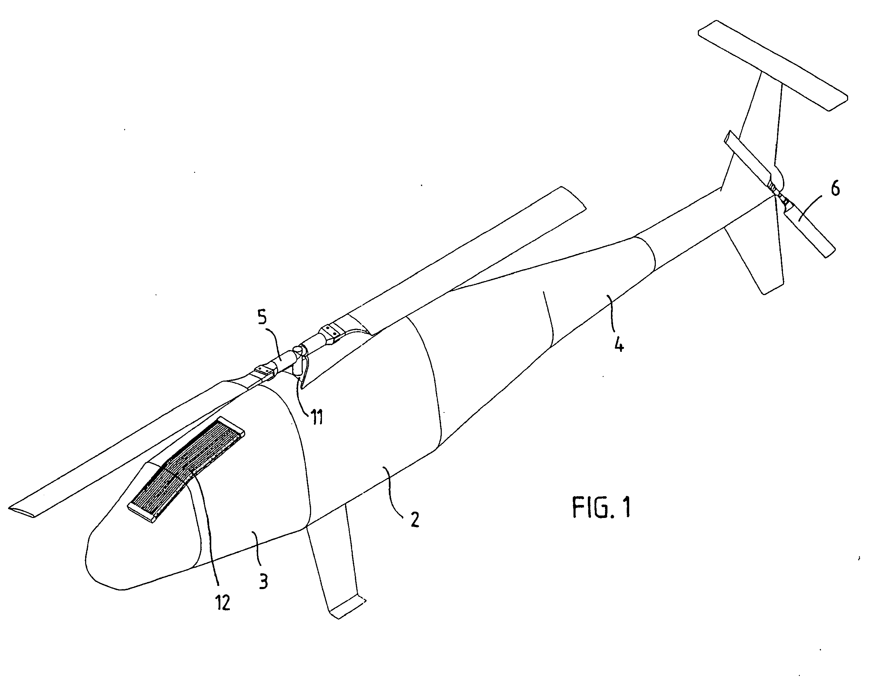

- Fig. 1: einen erfindungsgemäßen Hubschrauber in schaubildlicher Ansicht;

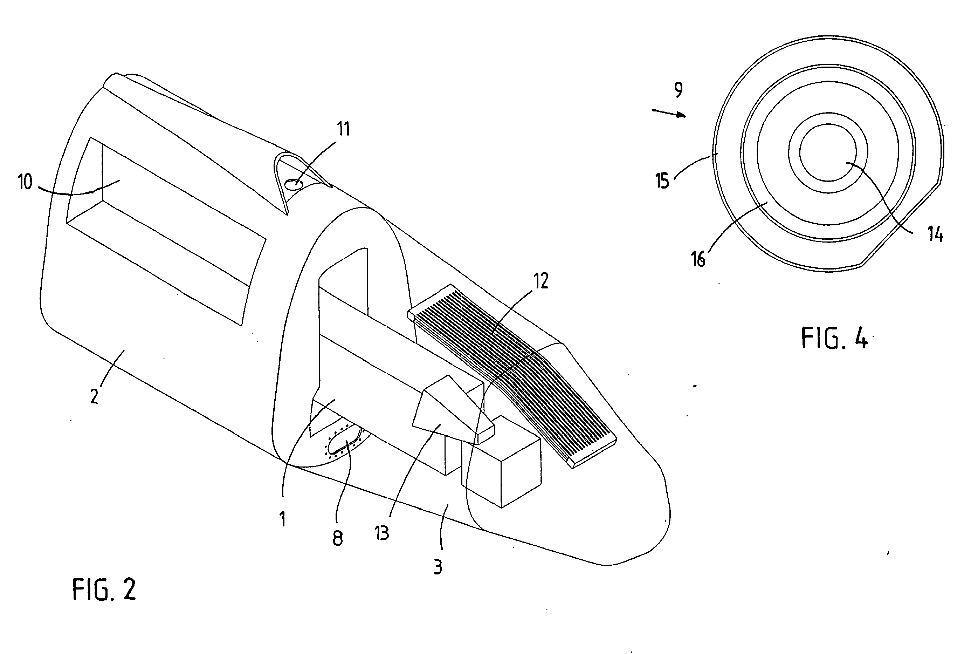

- Fig. 2: in einem gegenüber der Fig. 1 vergrößertem Maßstab eine schematische schaubildliche Ansicht des den Verbrennungsmotor aufnehmenden Gehäuses mit dem Nasenkörper;

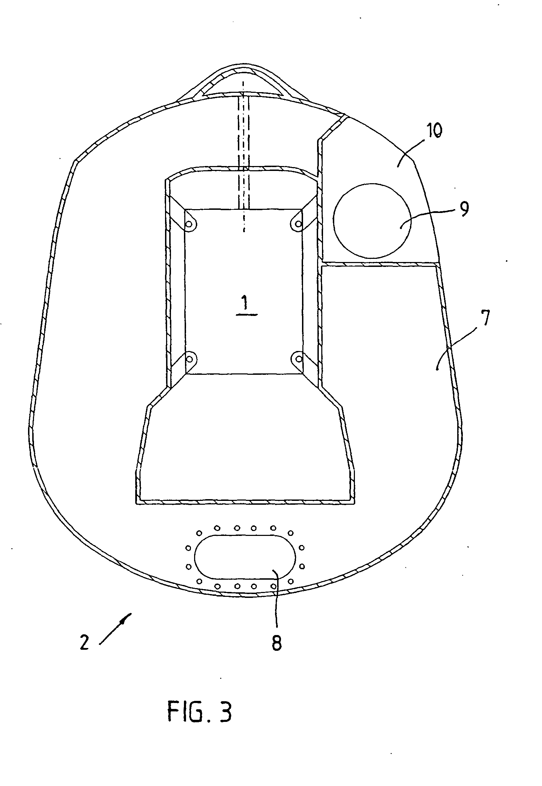

- Fig. 3: einen Schnitt durch das mit dem Treibstofftank versehene Gehäuse;
- Fig. 4: einen Schnitt durch den Auspuff.

Gemäß den Zeichnungen weist ein Hubschrauber nach der Erfindung ein die Einheit 1 aus Verbrennungsmotor und Getriebe im wesentlichen aufnehmendes Gehäuse 2 auf, an das ein Nasenkörper 3 anschließt, in den die Einheit 1 hineinragt. Ein Hinterteil 4 schließt nach hinten an. Der als Wankelmotor ausgebildete Verbrennungsmotor der Einheit 1 treibt einen Hauptrotor 5 und einen Heckrotor 6 an.

Das die Einheit 1 aufnehmende Gehäuse 2 ist hohl ausgebildet und der Hohlraum dient als Treibstofftank 7 mit der Treibstoffleitung 8. In einer nach außen offenen Ausnehmung 10 des Gehäuses 2 ist der Auspuff 9 angeordnet, dessen Ausbildung anhand der Fig. 4 besprochen werden wird. Für die Welle des Hauptrotors 5 ist eine Durchtrittsöffnung 11 vorgesehen.

Auf der Oberseite des Nasenkörpers 3 ist ein von einer Kühlflüssigkeit durchflossener Kühler 12 für den Verbrennungsmotor angeordnet. Dieser Kühler 12 ist dem durch den Hauptrotor 5 erzeugten Luftstrom ausgesetzt, wodurch die Kühlwirkung optimal ist. Die aus dem Kühler 12 austretende Luft durchströmt anschließend noch einen Ölkühler 13.

Um für eine Wärmebildkamera unauffällig zu bleiben, wird der Auspuff 9 gekühlt. Aus Fig. 4 ergibt sich, daß das konische Abgasrohr 14 von einem Doppelmantel umgeben ist. Der äußere Ringraum 15 wird von der vom Kühler 12 kommenden Kühlluft, der Ringraum 16 von der vom Rotorlager des Verbrennungsmotors kommenden Kühlluft durchströmt. Dadurch wird eine weitgehende Isolierung des durch das Abgasrohr 14 strömenden Abgasstromes erreicht. Zusätzlich wird die Ausnehmung 10 mit dem Auspuff 9 durch einen nicht dargestellten Deckel abgedeckt.

Im Rahmen der Erfindung sind zahlreiche Abänderungen möglich. So könnte die Kühlung anders als dargestellt erfolgen. Auch der Auspuff könnte an einer anderen Stelle angeordnet werden u.s.w..

## Patentansprüche

1. Unbemannter Hubschrauber mit einem Verbrennungsmotor und einem zugehörigen Treibstofftank, **dadurch gekennzeichnet, daß** die Einheit (1) aus Verbrennungsmotor und Getriebe in einem selbsttragenden, teilweise rundum geschlossenem Gehäuse (2), vorzugsweise aus kohlefaserverstärktem Kunststoff (CFK) angeordnet ist, an das nach vorne ein Nasenkörper (3) anschließt.

2. Unbemannter Hubschrauber nach Anspruch 1, **dadurch gekennzeichnet, daß** das die Einheit (1) aus Verbrennungsmotor und Getriebe aufnehmende Gehäuse (2) als Treibstofftank (7) wenigstens teilweise hohl ausgebildet ist.

3. Unbemannter Hubschrauber nach Anspruch 1 oder 2, **dadurch gekennzeichnet, daß** in einer durch einen Deckel verschließbaren, nach außen offenen Ausnehmung (10) des die Einheit (1) aus Verbrennungsmotor und Getriebe aufnehmenden Gehäuses (2) der Auspuff (9) des Verbrennungsmotors angeordnet ist.

4. Unbemannter Hubschrauber nach einem der Ansprüche 1 bis 3, **dadurch gekennzeichnet, daß** auf der Oberseite des Nasenkörpers (3) ein von einer Kühlflüssigkeit durchflossener Kühler (12) für den Verbrennungsmotor angeordnet ist.

5. Unbemannter Hubschrauber nach Anspruch 4, **dadurch gekennzeichnet, daß** unterhalb des Kühlers (12) für den Verbrennungsmotor ein Ölkühler (13) angeordnet ist.

6. Unbemannter Hubschrauber nach einem der Ansprüche 1 bis 5, **dadurch gekennzeichnet, daß** der Auspuff (9) des Verbrennungsmotors von einem Doppelmantel umgeben ist, dessen äußerer Ringraum (15) von der vom Kühler (12) kommenden Kühlluft, und dessen anschließender innerer Ringraum (16) von der vom Rotorlager des Verbrennungsmotors kommenden Kühlluft durchströmt wird.

## Claims

1. An unmanned helicopter with an internal combustion engine and a dedicated fuel tank, **characterized in that** the unit (1) consisting of the internal combustion engine and the transmission is arranged in a self-supporting housing (2) that is partially closed on all sides and preferably consists of carbon fiber-reinforced plastic (CFK), with a nose body (3) being connected to the front of said housing.

2. The unmanned helicopter according to Claim 1, **characterized in that** the housing (2) for accommodating the unit (1) consisting of the internal combustion engine and the transmission is realized in an at least partially hollow fashion and used as a fuel tank (7).

3. The unmanned helicopter according to Claim 1 or 2, **characterized in that** the exhaust (9) of the internal combustion engine is arranged in a recess (10) of the housing (2) that accommodates the unit (1) consisting of the internal combustion engine and the transmission, wherein said recess is open toward the outside and can be closed with a cover.

4. The unmanned helicopter according to one of Claims 1 - 3, **characterized in that** a radiator (12) of the internal combustion engine is arranged on the upper side of the nose body (3) and a coolant flows through this radiator.

5. The unmanned helicopter according to Claim 4, **characterized in that** an oil cooler (13) is arranged underneath the radiator (12) of the internal combustion engine.

6. The unmanned helicopter according to one of Claims 1 - 5, **characterized in that** the exhaust (9) of the internal combustion engine is surrounded by a double casing, wherein the cooling air arriving from the radiator (12) flows through the outer annular space (15) and the cooling air arriving from the rotor bearing of the internal combustion engine flows through the adjacent inner annular space (16) of the double casing.

## Revendications

1. Hélicoptère téléguidé avec un moteur à combustion interne et avec un réservoir à carburant associé, **caractérisé en ce que** l'unité (1) constituée du moteur à combustion interne et de la transmission est disposée dans un carter autoportant (2), partiellement fermé sur son pourtour, de préférence en matière plastique renforcée par fibres de carbone (HCF), sur lequel un nez (3) se raccorde sur l'avant.

2. Hélicoptère téléguidé selon la revendication 1, **caractérisé en ce que** le carter (2) accueillant l'unité (1) constituée du moteur à combustion interne et la transmission est conçu de façon au moins partiellement creuse, en tant que réservoir à carburant (7).

3. Hélicoptère téléguidé selon l'une quelconque des revendications 1 ou 2, **caractérisé en ce que** l'échappement (9) du moteur à combustion interne est disposé dans un creux (10) ouvert sur l'extérieur, pouvant être fermé par un couvercle du carter (2) accueillant l'unité (1) constituée du moteur à combustion interne et de la transmission.

4. Hélicoptère téléguidé selon l'une quelconque des revendications 1 à 3, **caractérisé en ce qu'**un radiateur (12) pour le moteur à combustion interne dans lequel circule un liquide réfrigérant est disposé sur la face supérieure du nez (3).

5. Hélicoptère téléguidé selon la revendication 4, **caractérisé en ce qu'**un refroidisseur d'huile (13) est disposé sous le radiateur (12) pour le moteur à combustion interne.

6. Hélicoptère téléguidé selon l'une quelconque des revendications 1 à 5, **caractérisé en ce que** l'échappement (9) du moteur à combustion interne est entouré d'une double enveloppe, dans l'espace annulaire extérieur (15) de laquelle circule de l'air de refroidissement arrivant du radiateur (12) et dans l'espace annulaire intérieur (16) qui s'y raccorde de laquelle circule de l'air de refroidissement arrivant du coussinet de rotor du moteur à combustion interne.
